(19) Europäisches Patentamt
European Patent Office
Office européen des brevets

(11) **EP 2 026 118 A1**

(12) **EUROPEAN PATENT APPLICATION**
published in accordance with Art. 153(4) EPC

(43) Date of publication:
**18.02.2009 Bulletin 2009/08**

(51) Int Cl.:
*G02C 7/02* (2006.01)  *G02B 1/10* (2006.01)

(21) Application number: **07744569.0**

(86) International application number:
**PCT/JP2007/061181**

(22) Date of filing: **01.06.2007**

(87) International publication number:
**WO 2007/142136 (13.12.2007 Gazette 2007/50)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.06.2006 JP 2006155929**

(71) Applicant: **Hoya Corporation Tokyo 161-8525 (JP)**

(72) Inventors:
• **KOUSAKA, Masahisa Tokyo 161-8525 (JP)**
• **TORIUMI, Hideo Tokyo 161-8525 (JP)**
• **HASEGAWA, Keigo Tokyo 161-8525 (JP)**

(74) Representative: **Betten & Resch Patentanwälte Theatinerstrasse 8 (Fünf Höfe) 80333 München (DE)**

(54) **PROCESS FOR MANUFACTURING SPECTACLE LENS, AND SPECTACLE LENS**

(57) Even when the optical surface (2a, 2b) of a spectacle lens (1) is a machined surface, a machining trace can be erased, so no machining trace is visually observed during inspection. The step of applying a coating film solution, made of a material which is the same as that of a lens base material, on the optical surface (2a, 2b) of the spectacle lens (1) which is a machined surface, and the step of forming a coating film (4) by hardening, by heating, the coating film solution applied to the optical surface (2a, 2b) are provided. The steps of forming a hard coating film (5) on the film (4) and an antireflection film (6) on the hard coating film (5) are also provided.

**FIG.2**

EP 2 026 118 A1

**Description**

Technical Field

The present invention relates to a method of manufacturing a spectacle lens including an optical surface as a machined surface, and a spectacle lens.

Background Art

The optical surface of a spectacle lens requires high surface accuracy. Hence, a conventional optical surface is formed by rough grinding, sandblasting, and polishing.

As the conventional process of forming the optical surface of a spectacle lens requires three steps, i.e., rough grinding, sandblasting, and polishing, the manufacture takes a long period of time, leading to low productivity and high manufacturing cost. In view of this, in recent years, a spectacle lens including an optical surface as a machined surface has been put into practical use, as disclosed in, e.g., Japanese Patent Laid-Open Nos. 2002-182011, 2003-525760, and 10-175149. A machined surface refers to a surface which is cut or ground by a lathe, milling machine, or the like. It is known that such a machined surface can have high surface accuracy as a processing machine itself develops rapidly in recent years.

According to a lens manufacturing methods described in Japanese Patent Laid-Open No. 2002-182011, a spectacle lens is fabricated by cutting the surface of a lens blank by an ultra-precise lathe. With this manufacturing method, a transparent thin film (hard coating film) is formed on the cut surface of the obtained spectacle lens such that a maximum height P-v of the surface roughness is 0.04 $\mu$m or less. Examples of the lens material (to be referred to as a lens base material as well hereinafter) include a methacrylate-based resin, polyurethane-based resin, polycarbonate-based resin, acrylate-based resin, polyester-based resin, and the like. Examples of the material of the thin film include an organosilicon compound, its hydrolyses composition, and metal oxide fine particles.

A spectacle lens surface forming method described in Japanese Patent Laid-Open No. 2003-525760 comprises the process for moving a cutting tool along a continuous path in a desired surface envelope to machine the surface of the material, thus forming two adjacent helical grooves positioned at a constant pitch of 0.01 mm to 3 mm. This machining forms a surface with an arithmetic mean roughness (Ra) of 1.1 $\mu$m to about 0.7 $\mu$m. This forming method also includes the step of moving a smoothing tool along a continuous path consisting of two adjacent paths positioned at a constant pitch of 0.2 mm to 3 mm to smoothen the machined surface, and the step of forming a coating film layer on the smoothened surface with varnish to make the surface in a polished state. According to the surface smoothening step, bandpass filtering is produced for the undulations of the surface between a low frequency corresponding to a desired surface envelope and a high frequency corresponding to a background roughness, so that a smoothened surface with an arithmetic mean roughness (Ra) of less than 1.1 $\mu$m is obtained. As the varnish that forms the coating film layer, a material having a refractive index (with an allowance of $\pm 0.01$) equal to that of the spectacle lens, which contains, e.g., a mixture of polyacrylate monomer, diacrylate monomer, and triacrylate monomer, and a halide- or preferably bromine-containing epoxy acrylate oligomer is used.

A spectacle lens manufacturing method described in Japanese Patent Laid-Open No. 10-175149 comprises an NC shaping step and an NC polishing step. The NC shaping step is a machining step of shaving the object-side surface or ocular surface of a spectacle lens on the basis of numerical control machining data and includes two steps, i.e., rough machining and finishing. Finishing provides a surface roughness (Rt) after machining to reach a maximum surface roughness Rmax of 0.01 $\mu$m to 10 $\mu$m. The NC polishing step is a step of polishing the shaved surface on the basis of the numerical control machining data which defines a surface shape to be polished. According to this manufacturing method, assume that the maximum surface roughness Rmax in the NC shaping step is 0.05 $\mu$m or less. In the case of a plastic lens, even if the polishing step is omitted, a desired optical surface can be obtained by forming a hard coating film is formed after the NC shaping step.

Disclosure of Invention

Problem to be solved by the Invention

A spectacle lens including an optical surface as a machined surface has been put into a practical use, as described above. With such a lens, if a lens blank undergoes cutting or grinding by the numerical control processing machine, a machined surface having high surface accuracy can be obtained. Thus, light is less scattered or reflected by the optical surface. Also, the productivity can be improved and the cost can be reduced.

In the lens inspecting step, assume that an operator inspects by visual observation a plastic lens optical surface which is a machined surface and has undergone a hard coating process. As far as a surface roughness Rt of the lens surface is 0.05 μm or less, the operator will not visually recognize any machining trace formed by machining. When, however, the plastic lens is inspected by an inspection method using a light source (an ultra-high pressure mercury lamp or fluorescent lamp) recommended by the Japanese Industrial Standard (JIS), machining traces formed by machining are visually recognized even in a lens having a surface roughness (Rt) of 0.05 μm or less. Such a machining trace corresponds to a defect defined by the JIS.

In view of the above situation, the present inventors made extensive studies on the relationship between the surface roughness of an optical surface and a coating film formed on the optical surface, and conducted various kinds of experiments while changing the materials of the lens and coating film and the surface roughness of the optical surface. When the surface roughness Rt of the optical surface was approximately 5 μm or less and the coating film was made of a material different from that of the spectacle lens, the machining traces could not be erased completely due to the difference in refractive index. Light scattering and reflection occurred on the interface between a machining trace and the coating film. Thus, a bright spectacle lens could not be obtained.

When the coating film was made of the same material as that of the spectacle lens, the coating film and the spectacle lens had the same refractive index. Even if a surface roughness Rt was approximately 1 μm to 5 μm, the machining traces could be erased almost completely depending on the lens. A bright spectacle lens could be obtained in which light scattering or reflection did not occur on the interface of the machining trace and the coating film. More particularly, when a spectacle lens was fabricated by machining a lens blank made of an allyl-based lens base material, if a surface roughness Rt of the optical surface was set to approximately 7 μm or less, the machining traces were visually recognized less often. A more preferable surface roughness Rt is 1 μm to 5 μm. A surface roughness Rt of 1 μm or less is not preferable because the machining time prolongs and the productivity decreases. As far as the surface roughness Rt falls within the range of 1 μm to 5 μm, the machining traces can be almost erased. Therefore, the surface roughness Rt need not be 1 μm or less. A surface roughness Rt of 5 μm or more is not preferable because machining traces are visually recognized more often.

When a spectacle lens was fabricated by machining a lens blank made of a urethane-based lens base material, the preferable surface roughness Rt of the optical surface was 1 μm to 2 μm. If the surface roughness Rt fell within this range, machining traces could be erased almost completely.

The present invention has been made based on the conventional problem and experimental result described above, and has as its object to provide a spectacle lens manufacturing method with which even if the optical surface is a machined surface, the machining traces can be almost erased and no machining trace is visually observed during inspection, and a spectacle lens.

Means of Solution to the Problem

In order to achieve the above object, a spectacle lens manufacturing method according to the present invention comprises the steps of applying a coating film solution, made of a material which is the same as that of a lens base material, on an optical surface of a spectacle lens which is a machined surface, and forming a coating film by hardening, by heating, the coating film solution applied to the optical surface.

A spectacle lens according to the present invention is formed by a spectacle lens manufacturing method according to the invention described above.

Effect of the Invention

According to the present invention, a coating film formed on an optical surface of a spectacle lens which is a machined surface is made of the same material as that of the spectacle lens. Thus, the optical characteristics of the spectacle lens can be completely match those of the coating film. Even when the optical surface is inspected by a projection inspection method employing an ultra-high pressure mercury lamp, an inspection method by reflection light checking of whether light from a fluorescent lamp in a room is reflected by the lens surface, or any other inspection method, no machining trace is visually recognized on the optical surface. Therefore, light scattering, reflection, or the like does not occur on the interface of the machined surface and the coating film, so that the optical characteristics and quality of the spectacle lens can be improved. The fact that the coating film is made of the same material as that of the spectacle lens signifies that when forming the coating film, a monomer (or a material containing a monomer as a major component) used for forming the spectacle lens is used as a coating film material.

According to the present invention, a bright spectacle lens in which no machining trace is observed on its optical surface can be obtained.

In the present invention, before the step of applying a coating film solution, the step of irradiating the machined spectacle lens with light to inspect a surface defect on the spectacle lens by visual observation may be added as one step in a spectacle lens manufacturing process.

In the present invention, the coating film solution to be applied to the spectacle lens may further contain a leveling agent. When the leveling agent is added, the wettability of the coating film solution with respect to the spectacle lens is improved to obtain a uniform film thickness. In particular, as the leveling agent, polyoxyalkylene-dimethylpolysiloxane copolymer is desirably used.

In the present invention, if the step of forming a hard coating film is provided after the step of forming a coating film on the optical surface of the spectacle lens, the resistance to marring of the spectacle lens can be improved.

In the present invention, if the step of forming an antireflection coating film is provided after the step of forming the hard coating film on the spectacle lens, the spectacle lens absorbs less light, so that reflection can be prevented.

In the present invention, if the spectacle lens and the coating film are made of an allyl-based synthetic resin base material and the surface roughness Rt of the optical surface is 1 $\mu$m to 5 $\mu$m, even when the optical surface is inspected by the projection inspection method employing an ultra-high pressure mercury lamp, an inspection method using a fluorescent lamp, or the like, no machining trace is visually recognized. Thus, the optical characteristics and quality of the spectacle lens can be improved. A surface roughness Rt of 1 $\mu$m or less is not preferable because the machining time prolongs and the productivity decreases. If the surface roughness Rt is 1 $\mu$m, the machining traces can be erased. Hence, any further precision machining is not necessary. A surface roughness Rt of 5 $\mu$m or more is not preferable because machining traces are visually recognized more often.

In the present invention, if the spectacle lens and the coating film are made of a urethane-based synthetic resin base material and the surface roughness Rt of the optical surface is 1 $\mu$m to 2 $\mu$m, even when the optical surface is inspected by the projection inspection method employing an ultra-high pressure mercury lamp, an inspection method using a fluorescent lamp, or the like, no machining trace is visually recognized. Thus, the optical characteristics and quality of the spectacle lens can be improved. A surface roughness Rt of 1 $\mu$m or less is not preferable because the machining time prolongs and the productivity decreases. If the surface roughness Rt is 1 $\mu$m, the machining traces can be erased. Hence, any further precision machining is not necessary. A surface roughness Rt of 2 $\mu$m or more is not preferable because machining traces are visually recognized more often. Brief Description of Drawings

Fig. 1 is a sectional view of a spectacle lens fabricated by a spectacle lens manufacturing method according to the present invention;

Fig. 2 is an enlarged view of a portion A in Fig. 1;

Fig. 3 is a view showing the schematic arrangement of an NC-controlled curve generator;

Fig. 4 is a flowchart showing steps in a spectacle lens manufacturing process;

Fig. 5 is a perspective view showing how a spectacle lens is conveyed to a spin processing unit; and

Fig. 6 is a view showing optical inspection of the spectacle lens.

Best Mode for Carrying Out the Invention

The present invention will be described in detail based on the embodiment shown in the drawings.

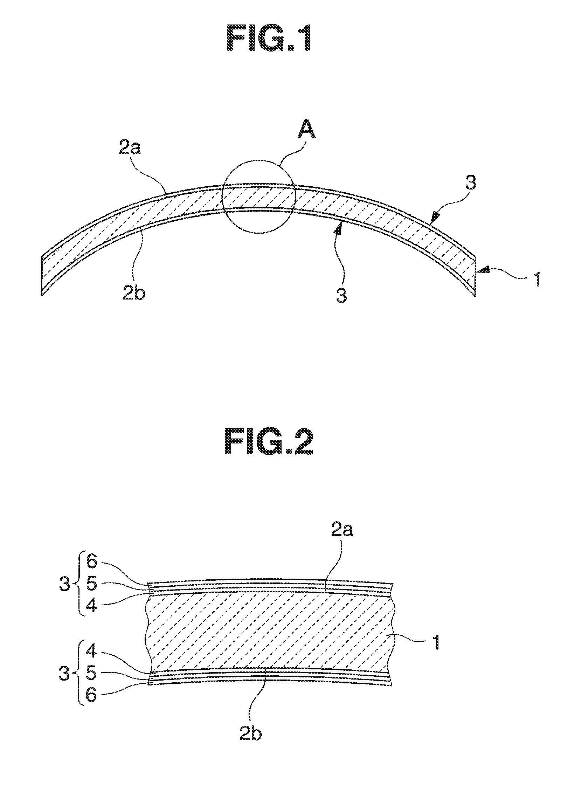

Referring to Figs. 1 and 2, a spectacle lens 1 is a plastic lens manufactured by a manufacturing method according to the first embodiment of the present invention. A convex-side optical surface 2a and concave-side optical surface 2b of the spectacle lens 1 are machined surfaces cut by a curve generator, and each have a protection film layer 3 made of three layers.

Examples of the lens base material of the spectacle lens 1 include a copolymer of methacrylate and one or more types of other monomers, a copolymer of diethyl glycol bis(allyl carbonate) and one or more types of other monomers, polycarbonate, urethane, polystyrene, polyvinyl chloride, unsaturated polyester, polyethylene terephthalate, polyurethane, polythiourethane, a sulfide utilizing an enthiol reaction, and a vinyl copolymer containing sulfur. As the lens base material of the present invention, a plastic lens base material or spectacle plastic lens base material is preferable. Among them all, a urethane-based lens base material and allyl-based lens base material are more preferable.

In this embodiment, the spectacle lens 1 is manufactured using diethyl glycol bis(allyl carbonate) (trade name: "CR-39") as the lens base material. In the manufacture of the spectacle lens 1, a lens blank is fabricated first. The lens blank is manufactured by filling a molding die disclosed in, e.g., Japanese Patent Laid-Open No. 2005-141162 with a monomer and heating the mold by an electric furnace for a predetermined period of time. The molding die includes a cylindrical gasket and a pair of molds built into the gasket. Upon heating for the predetermined period of time by the electric furnace, the monomer in the molding die polymerizes and hardens to form a lens blank, and the lens blank is taken out of the die.

Subsequently, the two surfaces of the lens blank taken out of the molding die are cut (or ground) by a processing machine such as a lathe, thus manufacturing the spectacle lens 1. Therefore, the optical surfaces 2a and 2b of the obtained spectacle lens 1 are formed of machined surfaces and have helical grooves (to be referred to as machining traces hereinafter). Each of the optical surfaces 2a and 2b formed of such a machined surface desirably has a surface roughness Rt of 1 $\mu$m to 5 $\mu$m.

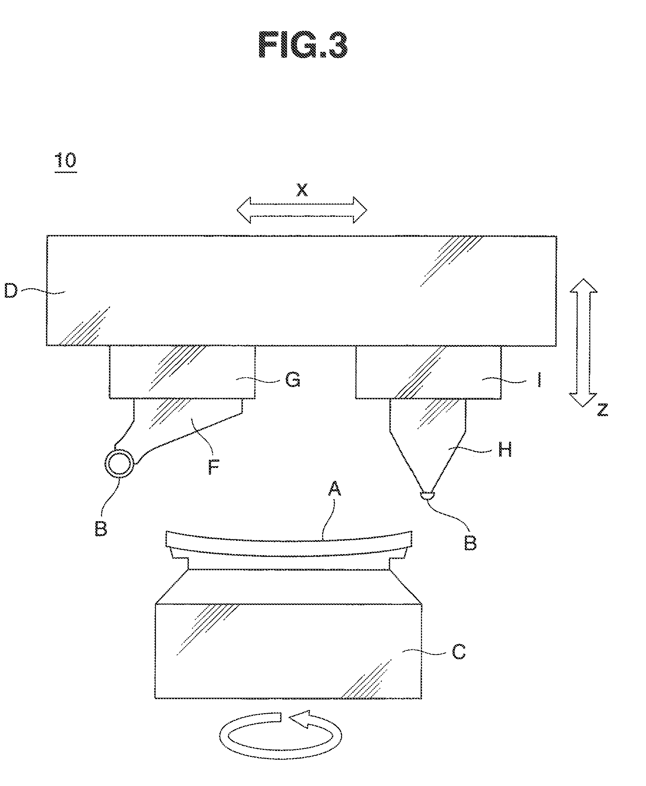

Such optical surfaces 2a and 2b of the spectacle lens 1 are formed by a processing machine, e.g., an NC-controlled curve generator 10 shown in Fig. 3.

The curve generator 10 is a processing machine that controls with a computer the distances from a cutting blade to the lens blank and to the rotation axis in accordance with the shape of a curved surface as the formation target while rotating a round lens blank about the rotation axis, extending through a specific point on the curved surface as the machining target, as the center, thus forming the shape of the curved surface shape as the machining target. More specifically, the curve generator 10 is a triaxial-control processing machine which does not rotate the cutting blade but rotates the lens blank at its geometric center to machine the lens blank while feeding the diamond cutting edge from the outer periphery of the lens to the geometric center with a predetermined pitch to trace the shape of the optical surface.

The arrangement of the curve generator 10 will be briefly described. The curve generator 10 includes a lower shaft C and upper shaft D. A lens blank A is attached to the lower shaft C, and the lower shaft C does not move but rotates axially. The upper shaft D includes a first upper shaft portion G to which a first cutting tool F for rough cutting is attached, and a second upper shaft portion I to which a second cutting tool H for finishing is attached. When machining, the upper shaft D moves in the horizontal direction to perform switching between the first and second upper shaft portions G and I. As the material of cutting blades B of the cutting tools F and H, for example, sintered polycrystalline diamond or single-crystal natural diamond is used. To machine the convex-side surface of the lens blank A into the optical surface 2a formed of a predetermined curved surface, the design shape height data on the convex shape which is represented by matrix is sent to the NC controller.

In cutting the lens blank A, the lens blank A is attached to the lower shaft C, and the lower shaft C is rotated. The first cutting tool F is biaxially controlled in the radial direction and vertical direction from the outer periphery of the lens blank A to roughly machine the convex surface of the lens blank A with the cutting blade B. Subsequently, the second cutting tool H is biaxially controlled similarly in the radial direction and vertical direction from the outer periphery of the lens blank A to finish the convex surface of the lens blank A with the cutting blade B into the optical surface 2a formed of a curved surface having a predetermined surface roughness.

Such a curve generator 10 provides machining accuracy of 3 $\mu$m or less and a maximum surface roughness Rt of 0.2 $\mu$m to 5 $\mu$m when the lens has a lens diameter of 50 mm. The time required to machine a lens having a diameter of, e.g., 80 mm, if the machining includes only finishing, is about 1 min, about 5 min, about 50 min, and approximately 100 min when the maximum surface roughness Rt is 5 $\mu$m, 1 $\mu$m, 0.1 $\mu$m, and 0.05 $\mu$m, respectively.

The protection film layer 3 comprises three layers, i.e., a coating film 4 as the lowermost layer, a hard coating film 5 as the intermediate layer, and an antireflection coating film 6 as the uppermost layer. The coating film 4 as the lowermost layer is a coating film formed to erase the machining traces on the optical surfaces 2a and 2b to improve the optical characteristics of the spectacle lens 1. The coating film 4 is formed of a monomer made of the same material as that of the spectacle lens 1. Accordingly, the material characteristics such as the refractive index and viscosity of the spectacle lens 1 are completely the same as those of the coating film 4.

The hard coating film 5 as the intermediate layer is a coating film formed to increase the hardness of the spectacle lens 1 and improve the resistance to marring of the spectacle lens 1. The hard coating film 5 is made of an organic substance such as a silicon-based resin.

The antireflection coating film 6 as the uppermost layer is a coating film formed to improve the antireflection effect as well as the resistance to marring of the spectacle lens 1. As the material of the antireflection coating film 6, for example, a metal oxide of Zr, Ti, Sn, Si, In, Al, or the like, a silicon oxide, or $MgF_2$ is used.

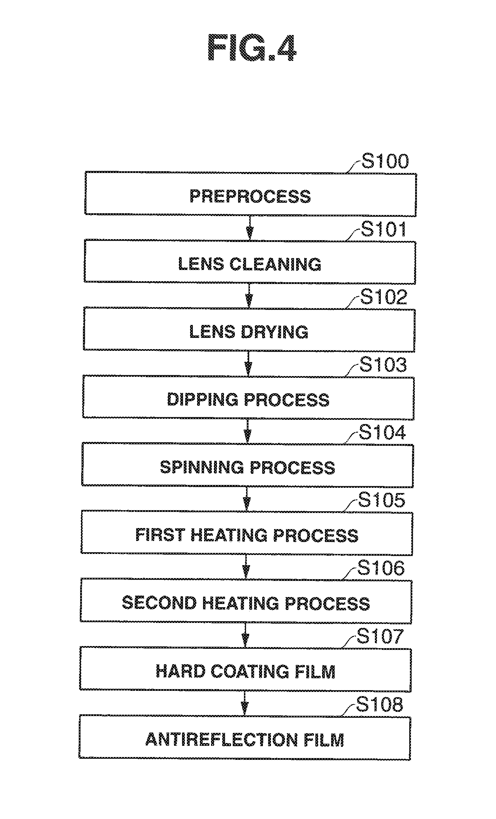

A method of manufacturing a spectacle lens according to the first embodiment will be described with reference to Figs. 4 to 6.

Step 100: Preprocess Step

The operator manually wipes the optical surfaces 2a and 2b of the machined spectacle lens 1 with a solvent such as acetone. When manual wiping is ended, the spectacle lens 1 is mounted on a spinner. The spinner blows ionizing air to the optical surfaces 2a and 2b simultaneously for a predetermined period of time (about 15 sec) while rotating the spectacle lens 1 at a low speed, thus destaticizing the optical surfaces 2a and 2b. The optical surfaces 2a and 2b can be treated in any manner as far as it is effective in adjusting the states of the optical surfaces 2a and 2b so that the solution of the coating film 4 can be applied to them easily, and this treatment is not limited to the preprocess described above.

Step 101: Cleaning Step

When preprocess for the optical surfaces 2a and 2b is ended, the spectacle lens 1 is conveyed to a cleaning tank by a conveying mechanism and cleaned with a cleaning fluid in the cleaning tank. This cleaning is performed by dipping the spectacle lens 1 in the cleaning fluid. As the cleaning fluid, water (pure water), solvent-based liquid, an aqueous solution of detergent, or the like is used. The cleaning fluid overflows in the cleaning tank and is circulated between the cleaning tank and a provided reserve tank by a pump while being filtered. The cleaning tank incorporates an ultrasonic element, and comprises constituent elements such as a temperature adjusting device and various types of detection switches which are necessary for cleaning and circulation of the cleaning fluid.

Step 102: Drying Step

After cleaning with the cleaning fluid is ended, the spectacle lens 1 is dried by the spinner. The spinner rotates the spectacle lens 1 for a predetermined period of time (about 3 min) while increasing the rotational speed stepwise like, e.g., 500 rpm → 1,000 rpm → 2,000 rpm to blow off water droplets attached to the optical surfaces 2a and 2b with centrifugal force, thus drying the spectacle lens 1. The spin conditions (e.g., spin rotational speed, acceleration, deceleration, stop, and the like) of the spinner can be set by a program in advance. The spin conditions are determined as needed in accordance with the type of the lens base material and the cleaning state.

Step 103: Coating Film Solution Applying Step

When drying with the spinner is ended, the spectacle lens 1 is conveyed to a dip processing unit by a dip arm and dipped in the coating film solution in a dip tank for a predetermined period of time. The coating film solution is a solution made of the same material as that of the spectacle lens 1, and applied to the optical surfaces 2a and 2b simultaneously.

When dipping the spectacle lens 1 in the coating film solution in the dip tank, the dip arm changes the direction of the spectacle lens 1 such that the radial direction of the spectacle lens 1 held by the dip arm is almost perpendicular to the liquid level of the coating film solution. Then, the dip arm moves downward to dip the spectacle lens 1 in the coating film solution for a predetermined period of time (about 30 sec). When a predetermined period of time has elapsed, the dip arm moves upward to lift the spectacle lens 1 from the coating film solution (the lifting time is 1 sec to 2 sec).

The process conditions of dipping into the coating film solution are determined as required in accordance with the states of the optical surfaces 2a and 2b, the characteristics of the coating film solution, and the like. The coating film fluid overflows in the dip tank and is circulated between the dip tank and a provided reserve tank by a pump while being filtered. The dip tank includes constituent elements such as a temperature adjusting device and various types of detection switches which are necessary for dipping and circulation of the cleaning fluid. Step 104: Removal of Excessive Coating Film Solution

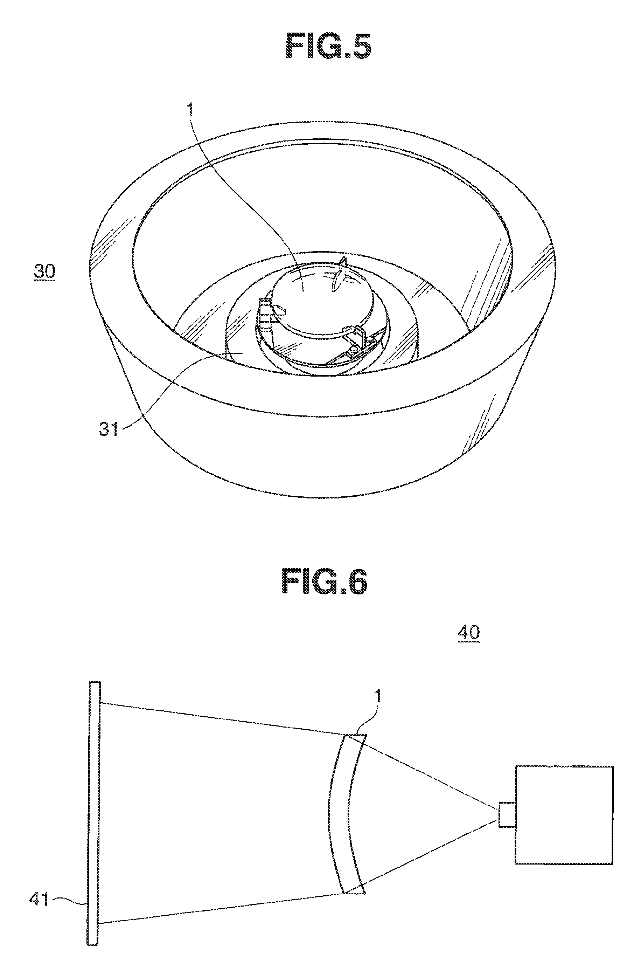

When the dipping process is ended, the spectacle lens 1 is conveyed to a spin processing unit 30 shown in Fig. 5 by a convey device and mounted on a spinner 31. The spinner 31 rotates the spectacle lens 1 at high speed (1,750 rpm to 1,780 rpm) to blow off any excessive coating film solution attached to the optical surfaces 2a and 2b with the centrifugal force. The spinner 31 has a variable rotational speed, and its spin conditions (e.g., the spinning rotational speed, acceleration, deceleration, stop, and the like) can be set by a program in advance. The spin conditions are determined as needed in accordance with the type of the lens base material and the cleaning state.

Step 105: First Heating Process

When the spinning process is ended, the spectacle lens 1 is conveyed to a film hardening processing unit by the convey device and mounted in the first heating furnace. The first heating furnace heats the spectacle lens 1 (in first heating process) with hot air at a predetermined temperature (80°C) for a predetermined period of time (about 7 min). The conditions for the first heating process are determined as needed in accordance with the hardening characteristics of the coating film solution. A clean environment is set from lens cleaning to the first heating furnace.

Step 106: Second Heating Process

When the first heating process is ended, the spectacle lens 1 is taken out of the first heating furnace by the convey device and consecutively mounted in the second heating furnace. The second heating furnace heats the spectacle lens 1 with hot air at a predetermined temperature (80°C) for a predetermined period of time (20 min) and then successively heats it (in second heating process) at 120°C for 1 hr. Then, the coating film solution applied to the optical surfaces 2a and 2b of the spectacle lens 1 hardens to form the coating film 4 shown in Fig. 2. In this manner, as the coating film 4 is formed by hardening of the spin-coated coating film solution, high surface accuracy can be obtained. For example, when a surface roughness Rt of each of the optical surfaces 2a and 2b was 5 $\mu$m, a surface roughness R of the coating film 4 was 0.03 $\mu$m. The conditions for the second heating process are determined as needed in accordance with the hardening characteristics of the coating film solution. Step 107: Hard Coating Film Forming Step

When the step of forming the coating film 4 is ended, the hard coating film 5 is formed on the coating film 4. The hard coating film 5 is formed in completely the same manner as in the formation of the coating film 4, by applying a hard coating film solution by dip & spin coating, and hardening, by heating, the hard coating film solution by a heating furnace. Formation of the hard coating film 5 is conventionally known and accordingly will not be described in detail.
Step 108: Antireflection Coating Film Forming Step

When the step of forming the hard coating film 5 is ended, the antireflection coating film 6 is consecutively formed on the hard coating film 5. The antireflection coating film 6 is formed by conventionally known vacuum deposition or sputtering, and accordingly will not be described in detail.

Another embodiment of the present invention will be described.

In this embodiment, only formation of the coating film 4 by the spinner is changed, and the remaining steps are the same as those of the embodiment described above.

A coating film solution is applied to optical surfaces 2a and 2b of a spectacle lens 1 by a spinner. The spinner rotates the spectacle lens 1 at a rotational speed of 70 rpm to apply approximately 5 g of a coating film solution to spread on the entire surface of each of the optical surfaces 2a and 2b from the center toward the circumference. Finally, the spinner rotates the spectacle lens 1 at a rotational speed of 1,000 rpm for 10 sec so that the coating film solution has a thickness of about 20 $\mu$m.

Then, the spectacle lens with the optical surfaces 2a and 2b coated with the coating film solution is mounted in an electric furnace, and its temperature is moderately raised by heating from 20°C to 120°C in 24 hrs. When the temperature-rise heating is ended, the spectacle lens 1 is lagged at 120°C for 2 hrs. This hardens the coating film solution applied to the spectacle lens 1 to form a coating film 4.

The spectacle lens 1 on which the coating films 4 are formed is inspected by visual inspection determined for a refraction correcting single-vision spectacle lens of the Japanese Industrial Standards (JIS-T7313) and projection inspection employing the Schlieren method. As a result, it was confirmed that in any inspection, any surface defect such as a cutting trace was not observed, and a spectacle lens in which the surfaces of the optical surfaces 2a and 2b were optically uniform was obtained.

According to the visual inspection method determined by JIS-T7313, a lens as an inspection target is arranged between the light source and the observer, and the presence/absence of a surface defect on the lens is visually observed (see JIS-T7313, appendix A: "Method of Evaluating Qualities of Material and Surface").

Furthermore, when a surface roughness Rt of the coating film 4 was measured by a roughness measurement unit, it was 0.017 $\mu$m. Therefore, the coating film 4 could mask the roughness of the cut surface. The surface roughness Rt of the coating film 4 was measured using a Form Talysurf device. In calculation of the surface roughness Rt, the cutoff value (Lc) was 0.08 mm, and the band width was 30 : 1. The evaluation length was set 11 times the reference length of the roughness curve. The roughness was measured a plurality of number of times to calculate the respective surface roughnesses Rt, and their arithmetic mean was obtained.

Still another embodiment of the present invention will be described.

According to this embodiment, a leveling agent is added to a coating film solution to be applied to optical surfaces 2a and 2b of a spectacle lens 1, so that the wettability of the coating film solution with respect to the optical surface are improved during coating, thus obtaining a uniform film thickness.

As the leveling agent, various types of leveling agents can be employed. Among them all, polyoxyalkylene-dimethylpolysiloxane copolymer (e.g., Y-7006 manufactured by Nippon Unicar) is preferably used. The usage of leveling agent in the coating film solution can be adjusted in accordance with the viscosity, wettability, and the like of the coating film solution, and can be set to, e.g., 10 ppm to 10,000 ppm.

In addition to the leveling agent, a known additive such as an ultraviolet absorbing agent, an infrared absorbing agent, a light stabilizer, an anti-oxidizing agent, a dye, a pigment, a photochromic agent, or an antistatic agent can be added to the coating film solution. A gradient index is not preferable in a coating film 4. Hence, the coating film solution preferably rarely contains particulate matters with a particle size of 1 nm or more such as metal oxide fine particles contained in a hard coating film forming coating solution. "Rarely contains" means not to add intentionally. To contain a trace amount of particulate matters as an impurity is allowed. From the viewpoint of decreasing a gradient index in the coating film, preferably, the coating film solution does not contain particulate matters as an impurity as well. In order to prevent a refractive index reduction and a residual solvent, a decrease in the amount of solvent is preferable. It is more preferable not to use the solvent.

In order to form a coating film having a uniform film thickness, at 20°C, the viscosity of the coating film solution is preferably 5 mPa/s to 200 mPa/s, and more preferably 10 mPa/s to 100 mPa/s.

The coating film solution is prepared by mixing various kinds of additives that are used where necessary. The order of addition of the respective compounds is not particularly limited. It is preferable to mix, e.g., a hindered anti-oxidizing agent to the coating film solution uniformly and add a leveling agent to the resultant mixture. It is preferable to deaerate the prepared coating film solution at a vacuum degree of, e.g., approximately 26.6 Pa to 2666 Pa by stirring. To prevent contamination by a foreign substance, it is preferable to filter the coating film solution before coating with a filter having an average pore diameter of, e.g., 10 $\mu$m or less.

According to this embodiment, when the main component of the coating film 4 is the same as that of the lens base material, it is suitable to adjust the refractive index of the spectacle lens to 0.05 diopter or less. The main component of the coating film 4 is a component that occupies 50% by mass or more of the lens base material.

The surface properties of the spectacle lens 1 manufactured in the above manner are inspected by a projection inspection device 40 using an ultra-high pressure mercury lamp shown in Fig. 6. For inspection, in the projection inspection device 40, the ultra-high pressure mercury lamp is turned on to irradiate the spectacle lens 1 as an inspection target lens to project the projection images of the optical surfaces 2a and 2b onto a screen 41. When the projection images of the optical surfaces 2a and 2b are projected onto the screen 41, the operator observes them with the naked eye to inspect whether or not any machining trace formed by machining is visually observed. As the result of the inspection, in the spectacle lens 1 manufactured in accordance with the present invention, when the lens base material is made of diethyl glycol bis(allyl carbonate), if surface roughnesses Rt of the optical surfaces 2a and 2b fell within the range of 1 $\mu$m to 5 $\mu$m, the machining traces were erased and could not be visually observed in either the optical surface 2a or 2b. This is due to the following reason. As the spectacle lens 1 is made of the same material as that of the coating film 4, they have the same refractive index, so that light is not reflected or scattered by the interface between the optical surface 2a and coating film 4 and that between the optical surface 2b and coating film 4.

According to another inspection method, the operator may visually inspect the machined optical surfaces 2a and 2b of the spectacle lens based on JIS-T1313, and visually observe the surface defect such as a machining trace.

For example, when a conventional spectacle lens which is cut by a lathe undergoes visual inspection, a cutting trace formed of a helical projecting body and a groove which are formed by the cutting tool is visually observed. When the surface of the spectacle lens 1 is damaged during machining or the like, this damage is also visually observed.

In contrast to this, according to the present invention, the coating film 4 made of the same material as that of the lens base material is formed on the surface of the spectacle lens 1 which has such a machining trace or damage. The spectacle lens 1 can thus be obtained in which no surface defect such as a cutting trace is observed in visual inspection. Note that the "surface defect" in the present invention includes a machining trace such as a cutting trace which is formed by the edged tool for machining, and a defect such as a damage which is formed on the surface of the lens base material during the manufacture and machining of the lens base material.

As the surface property inspection of the spectacle lens 1, other than the inspection done by the projection inspection device 40, a transmission inspection using a fluorescent lamp set in a black box and an inspection by reflection light checking of whether light from a fluorescent lamp in the room is reflected by the lens surface were performed. In either inspection, the machining traces were erased and could not be visually observed, in the same manner as in the inspection using the projection inspection device 40. The inspection of a projection image by means of the projection inspection device 40 suits inspection of a lens with a minus dioptric power, and the transmission inspection by means of the fluorescent lamp suits inspection of a lens with a plus dioptric power.

According to the present invention, when the spectacle lens 1 and coating film 4 are formed using diethyl glycol bis(allyl carbonate) as the lens base material, the surface roughnesses Rt of the optical surfaces 2a and 2b can be set to approximately 5 $\mu$m at maximum. This can shorten the time required for machining, thus improving the productivity of the spectacle lens 1.

When the lens base material of the spectacle lens 1 changes, the workability changes, and accordingly the upper limits of the surface roughnesses Rt of the optical surfaces 2a and 2b also change. For example, with a urethane-based resin, when the surface roughnesses Rt of the optical surfaces 2a and 2b were suppressed to approximately 1 $\mu$m to 2 $\mu$m, the machining traces could be erased.

Each embodiment described above shows a case in which the coating film 4 made of one layer is formed on each of the optical surfaces 2a and 2b. However, the present invention is not limited to this, but a coating film 4 made of two or more layers can be formed on each of the optical surfaces 2a and 2b. For example, when a coating film 4 made of two layers was formed, if the surface roughness of the machining surface was 5 $\mu$m, the surface roughness Rt of the second layer of the coating film 4 could be decreased to be smaller than that of the first layer of the coating film 4 (e.g., Rt = 0.021 $\mu$m). A spectacle lens brighter than one in which a coating film 4 made of only one layer was formed could be obtained.

As the surface roughness measurement machine to obtain the surface roughness Rt of the spectacle lens 1, for example, a Form Talysurf device (e.g., model FTS PGI 840) manufactured by Taylor Hobson is preferably used. The value of the surface roughness Rt is desirably calculated according to JIS B0601 (GPS-surface property: contour curve method - term, definition, and surface property parameter), JIS B0633 (GPS-surface property: contour curve method - method and procedure of surface property evaluation), JIS B0651 (GPS-surface property: contour curve method - characteristics of a probe type surface roughness measurement unit), or the like. The surface roughness Rt can be obtained from data on one evaluation length which is equal to a length obtained by multiplying a reference length by a standard number.

The surface roughness Rt is the sum of the maximum value of the profile peak height and the maximum value of the profile valley depth of a roughness curve in the evaluation length. A surface roughness Rt($\mu$m) is desirably such that the uncertainty of data is minimized by obtaining the arithmetic mean of a plurality of surface roughnesses Rt = Xi (i = 1,..., n) obtained by, e.g., the measurement machine. The employed filter is a Gaussian filter (refer to the following equation; in the equation, n is an integer of 1, 2, 3, or the like).

[Equation 1]

$$Rt(\mu m) = \frac{1}{n}\sum_{i=1}^{n} Xi \qquad\qquad Xi\ (i = 1, \ldots, n)$$

Furthermore, in each of the above embodiments, the protection film layer 3 is formed on each of the optical surfaces 2a and 2b of the spectacle lens 1. However, the present invention is not limited to this, and the protection film layer 3 may be formed on either one optical surface, e.g., only on the convex-side optical surface 2a. The hard coating film 5 and antireflection coating film 6 need not always be formed.

**Claims**

1.  A method of manufacturing a spectacle lens, **characterized by** comprising the steps of:

    applying a coating film solution, made of a material which is the same as that of a lens base material, on an optical surface of the spectacle lens which is a machined surface; and
    forming a coating film by hardening, by heating, the coating film solution applied to the optical surface.

2.  A method of manufacturing a spectacle lens according to claim 1, **characterized by** further comprising, before the step of applying the coating film solution, the step of irradiating the machined spectacle lens with light to visually inspect a surface defect on the spectacle lens.

3.  A method of manufacturing a spectacle lens according to claim 1, **characterized in that** the coating film solution to be applied to the spectacle lens further contains a leveling agent.

4.  A method of manufacturing a spectacle lens according to claim 3, **characterized in that** the leveling agent comprises a polyoxyalkylene-dimethylpolysiloxane copolymer.

5.  A method of manufacturing a spectacle lens according to claim 1, **characterized by** further comprising, after the step of forming the coating film on the optical surface of the spectacle lens, the step of forming a hard coating film on the coating film.

6.  A method of manufacturing a spectacle lens according to claim 1, **characterized by** further comprising, after the step of forming the hard coating film on the spectacle lens, the step of forming an antireflection coating film on the hard coating film.

7.  A method of manufacturing a spectacle lens according to claim 1, **characterized in that** a material of the spectacle lens and that of the coating film comprise an allyl-based lens base material, and a surface roughness Rt of the optical surface is 1 $\mu$m to 5 $\mu$m.

8.  A method of manufacturing a spectacle lens according to claim 1, **characterized in that** a material of the spectacle lens and that of the film comprise a urethane-based lens base material, and a surface roughness Rt of the optical surface is 1 $\mu$m to 2 $\mu$m.

9.  A spectacle lens **characterized by** being formed by a method of manufacturing a spectacle lens according to claim 1.

# FIG.1

# FIG.2

# FIG.3

# FIG.4

```
        ┌──────────────────────────────┐  ╱S100
        │         PREPROCESS           │
        └──────────────────────────────┘
                        │
                        ▼
        ┌──────────────────────────────┐  ╱S101
        │        LENS CLEANING         │
        └──────────────────────────────┘
                        │
                        ▼
        ┌──────────────────────────────┐  ╱S102
        │         LENS DRYING          │
        └──────────────────────────────┘
                        │
                        ▼
        ┌──────────────────────────────┐  ╱S103
        │       DIPPING PROCESS        │
        └──────────────────────────────┘
                        │
                        ▼
        ┌──────────────────────────────┐  ╱S104
        │       SPINNING PROCESS       │
        └──────────────────────────────┘
                        │
                        ▼
        ┌──────────────────────────────┐  ╱S105
        │     FIRST HEATING PROCESS    │
        └──────────────────────────────┘
                        │
                        ▼
        ┌──────────────────────────────┐  ╱S106
        │    SECOND HEATING PROCESS    │
        └──────────────────────────────┘
                        │
                        ▼
        ┌──────────────────────────────┐  ╱S107
        │      HARD COATING FILM       │
        └──────────────────────────────┘
                        │
                        ▼
        ┌──────────────────────────────┐  ╱S108
        │      ANTIREFLECTION FILM     │
        └──────────────────────────────┘
```

# FIG.5

# FIG.6

## INTERNATIONAL SEARCH REPORT

| | International application No. |
|---|---|
| | PCT/JP2007/061181 |

A. CLASSIFICATION OF SUBJECT MATTER
*G02C7/02*(2006.01)i, *G02B1/10*(2006.01)i

According to International Patent Classification (IPC) or to both national classification and IPC

B. FIELDS SEARCHED

Minimum documentation searched (classification system followed by classification symbols)
G02C7/02, G02B1/10

Documentation searched other than minimum documentation to the extent that such documents are included in the fields searched
Jitsuyo Shinan Koho      1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-182011 A  (Asahi Optical Co., Ltd.), 26 June, 2002 (26.06.02), Par. Nos. [0012] to [0044] (Family: none) | 1-9 |
| Y | JP 2004-51388 A  (National Institute of Advanced Industrial Science and Technology), 19 February, 2004 (19.02.04), Claim 2; Par. No. [0029] (Family: none) | 1-9 |
| Y | JP 2005-141162 A  (Hoya Corp.), 02 June, 2005 (02.06.05), Par. Nos. [0042], [0063] & EP 1684097 A1 | 2 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 August, 2007 (28.08.07) | 11 September, 2007 (11.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/061181

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-47788 A   (Hoya Corp.),<br>16 February, 2006 (16.02.06),<br>Par. No. [0076]<br>(Family: none) | 3,4 |
| Y | JP 2003-525760 A   (Essilor International<br>Compagnie Generale d'Optique),<br>02 September, 2003 (02.09.03),<br>Par. Nos. [0031], [0032]<br>& EP 1175280 A | 7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002182011 A
- JP 2003525760 A
- JP 10175149 A
- JP 2005141162 A